Europäisches Patentamt

European Patent Office

Office européen des brevets

(19)

(11) **EP 0 409 574 B1**

(12) **EUROPEAN PATENT SPECIFICATION**

(45) Date of publication and mention
of the grant of the patent:
**23.10.1996 Bulletin 1996/43**

(51) Int Cl.$^6$: **G11B 7/09**

(21) Application number: **90307818.6**

(22) Date of filing: **17.07.1990**

(54) **Optical information recording and reproducing apparatus**

Optisches Informationsaufzeichnungs- und -wiedergabegerät

Appareil pour l'enregistrement et la reproduction de l'information par voie optique

(84) Designated Contracting States:
**DE FR GB IT NL**

(30) Priority: **18.07.1989 JP 183581/89**
**29.06.1990 JP 170067/90**

(43) Date of publication of application:
**23.01.1991 Bulletin 1991/04**

(73) Proprietor: **CANON KABUSHIKI KAISHA**
**Tokyo (JP)**

(72) Inventor: **Ogino, Tsukasa**
**Shimomaruko, Ohta-ku, Tokyo (JP)**

(74) Representative:
**Beresford, Keith Denis Lewis et al**
**BERESFORD & Co.**
**2-5 Warwick Court**
**High Holborn**
**London WC1R 5DJ (GB)**

(56) References cited:
**EP-A- 0 253 328**

## Description

### BACKGROUND OF THE INVENTION

#### Field of the Invention

The present invention relates to a recording and reproducing apparatus for an optical recording medium, and more specifically, it relates to an optical information recording and reproducing apparatus having a function for correcting the abnormity and/or impossibility of detection of a servo error signal.

#### Related Background Art

In the past, for example, optical discs have been known as an optical recording medium. The optical disc has concentric or spiral tracks and is divided into a plurality of sectors for permitting the recording of the data having variable lengths and the high speed access. The recording and reproducing of information regarding such optical disc is performed by illuminating a light beam spot emitted from an optical head onto a desired track of the disk while effecting the focusing and tracking servo control.

The above servo control is generally divided into two groups, i.e., an analogue servo control and a digital servo control, on the basis of the difference of signals to be handled. Recently, an interest has been directed to the digital servo control, since it can provide a stable servo control operation.

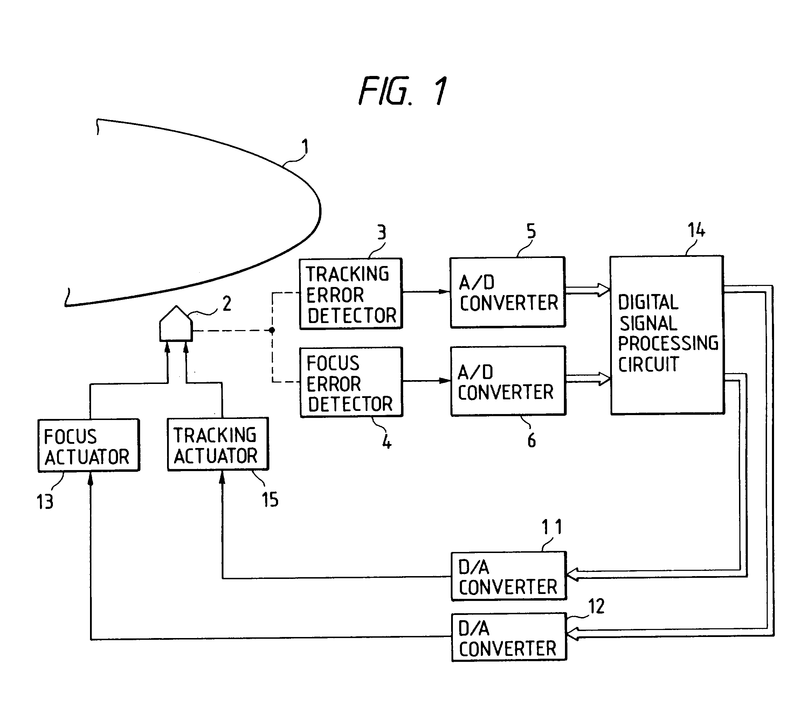

Fig. 1 shows an example of a conventional digital servo control apparatus. In Fig. 1, the reference numeral 1 denotes an optical disc as a recording medium; 2 denotes an optical system for an optical head; 3 denotes a tracking error detector for detecting a tracking error signal on the basis of an output from the optical system 2; 4 denotes a focus error detector for detecting a focus error signal on the basis of an output from the optical system 2. With respect to the tracking error detector 3 and the focus error detector 4, a known detecting method used in the optical information recording and reproducing apparatus can be adopted. For example, a push-pull method can be adopted to the tracking error detection, and an astigmatism method can be adopted to the focus error detection. Incidentally, the reference numerals and 6 denote A/D converters for A/D converting the error signals outputted from the error detectors 3 and 4 into digital signals, respectively; 14 denotes a digital signal processing circuit; 11 and 12 denote D/A converters for converting the digital signals from the digital signal processing circuit 14 into analogue signals; and 13 and 15 denote a tracking actuator and a focus actuator, respectively, for driving the optical system 2 of the optical head to predetermined directions. Next, the operation of the digital servo control apparatus having the above-mentioned arrangement will be explained.

First of all, when it is desired to record or reproduce information with respect to the optical disk 1 by means of the optical system 2, the optical system 2 is servo-controlled by the focus actuator 13 and the tracking actuator 15. This is achieved by detecting the tracking error signal and the focus error signal on the basis of the reflected light from the optical disc 1, by calculating the detected signals using predetermined exchange equations by means of the digital signal processing circuit to obtain a desired control amount, and by activating the actuators 13, 15 on the basis of the control amount.

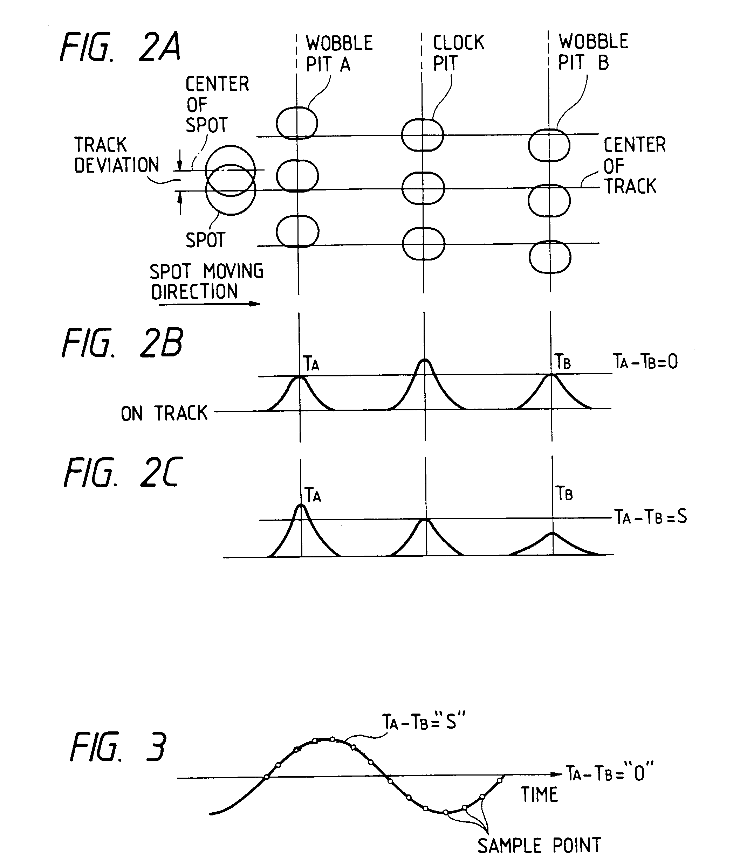

The servo control mode can further be divided into a continuous servo control system and a sample servo control system. The former is a system for performing the servo control by detecting the tracking error signal and the focus error signal at all times during the recording and reproducing operation, and the latter is a system for performing the tracking servo control and focus servo control by detecting the tracking error signal and the focus error signal at time shared control with the use of servo bites provided on the fronts of the respective sectors as shown in Figs. 2A - 2C.

Next, the control with the sample servo control system by using the above-mentioned digital servo control apparatus will be explained.

Fig. 2A shows an arrangement of wobble pits and clock pits in the servo bite area used in the sample servo control system. The wobble pits serve to detect the tracking error, and the clock pits serve to generate a clock signal for reproducing the data.

In the servo bit area, when the light beam spot is in an on-track condition, outputs as shown in Fig. 2B can be obtained, as the light beam spot is moved. The tracking error signal is obtained as "0" by A/D converting the outputs and then by calculating them on the basis of the subtraction $T_A - T_B$ by means of the digital signal processing circuit. If the light beam spot is slightly shifted toward the wobble pit A, as shown in Fig. 2C, the tracking error signal S is obtained by calculating the subtraction $T_A - T_B$. If the light beam spot passes across the track, the value S of $T_A - T_B$ will be changed as shown in Fig. 3. The focus error signal is detected at a mirror plane (not shown) provided behind the wobble pits. Thereafter, as is the conventional method, the control amount for the tracking and focus actuators is sought by performing the calculation on the basis of the predetermined exchange equations in the digital signal processing circuit, and the actuators are activated on the basis of the control amount. In this way, the control amount for the tracking and focus actuators obtained each servo bite area is held for a given time until a new control amount is sought in the next servo bite area. And, the control in a certain servo bite area is performed on the basis of the control amount held for said bite area.

However, in the control system as the above-mentioned sample servo control system, wherein the control is performed by detecting the tracking error signal and the focus error signal at time, shared mode, the following problem arose.

If during the error detecting operation the tracking error signal or the focus error signal is not obtained due to defect and/or damage of the disc or the presence of the dust, the desired control for the light beam spot can not be effected until the next error signals are obtained.

In order to solve such problem, conventionally, if the error signal could not be obtained, the servo control was performed by using the error signal obtained just before the occurrence of the impossibility of detection.

However, with this conventional method, the accurate control is not always obtained; particularly, if the error signal can not be obtained continuously for a long time, the conventional method worsens the control accuracy and cannot provide an adequate countermeasure.

EP-A-253328 discloses a light spot position control system for an optical disk in which servo areas and a data areas are alternately formed along the direction of rotation of the disk. The latest tracking error signal sampled is compared with at least one preceding sample value. A check is made to see if the latest sample value is correct or incorrect, and where the value is determined to be incorrect the preceding sample value is used instead or a presumed value is taken from a prediction table.

## SUMMARY OF THE INVENTION

The present invention aims to eliminate the above-mentioned conventional drawbacks, and an object of the present invention is to provide an optical information recording and reproducing apparatus which can perform an accurate servo control for a light beam spot even if an error signal cannot be detected during the error signal detecting operation in a servo control system wherein the servo control is performed by detecting tracking error signal and/or a focus error signal at a time shared mode.

According to a first aspect of the present invention there is provided an optical information recording and/or reproducing apparatus including detection means for detecting a signal indicative of a tracking error and/or focusing error in a time shared mode, calculation means for effecting calculation processing of the detected tracking and/or focusing error signal on the basis of a predetermined equation and for calculating a control amount for at least one actuator so as to correct the tracking and/or focusing error, and an actuator which is driven on the basis of said control amount, wherein

said apparatus further includes memory means for storing N signals indicative of tracking and/or focusing errors detected in the time shared mode, wherein when said detection means cannot detect a signal indicative of tracking and/or focusing error said calculation means is arranged to estimate a signal indicative of the latest tracking and/or focusing error from the previously detected N signals which are stored in said memory means, and said calculation means is arranged to effect the calculation of the estimated signal indicative of tracking and/or focusing error on the basis of said predetermined equation to calculate the control amount for the actuator so as to correct the tracking and/or focusing error, said apparatus being characterized in that the N signals stored in said memory means are arranged to be rewritten to include the estimated signal indicative of the latest tracking and/or focusing error.

According to a second aspect of the present invention there is provided an optical information recording and/or reproducing method in which a signal indicative of tracking and/or focusing error is detected in a time shared mode, comprising the steps of processing the detected tracking and/or focusing error signal on the basis of a predetermined equation,

storing N signals indicative of tracking and/or focusing error detected in the time shared mode in a memory;

estimating a signal indicative of latest tracking and/or focusing error from the previously detected N signals indicative of tracking and/or focusing error, stored in the memory, when the signal indicative of tracking and/or focusing error could not be detected;

effecting calculation of the estimated signal indicative of tracking and/or focusing error on the basis of the predetermined equation and calculating the control amount for the actuator so as to correct the tracking and/or focusing error; and

driving the actuator on the basis of the control amount to properly apply a light spot onto a recording medium to thereby effect recording and/or reproduction of information,

said method being characterized by the step of:

rewriting the N signals stored in the memory to include the estimated signal indicative of the latest tracking and/or focusing error.

## BRIEF DESCRIPTION OF THE DRAWINGS

Fig. 1 is a block diagram showing an example of a conventional digital servo control apparatus;

Figs. 2A to 2C are views showing a control with a sample servo control system performed by using the digital servo control apparatus of Fig. 1;

Fig. 3 is a graph showing the change in a value S of $T_A$ - $T_B$ obtained from Figs. 2A to 2C;

Fig. 4 is a block diagram showing an example of a construction of an optical information recording and reproducing apparatus according to a first embodiment of the present invention;

Fig. 5 is a flow chart showing an operation in the servo control by means of the apparatus according to the first embodiment of the present invention of Fig. 4;

Fig. 6 is a graph showing an example of sample data of an error signal in the apparatus according to the first embodiment;

Fig. 7 is a flow chart showing an operation in the servo control by means of an optical information recording and reproducing apparatus according to a second embodiment of the present invention; and

Fig. 8 is a graph showing an example of sample data of an error signal in the apparatus according to the second embodiment.

## DESCRIPTION OF THE PREFERRED EMBODIMENTS

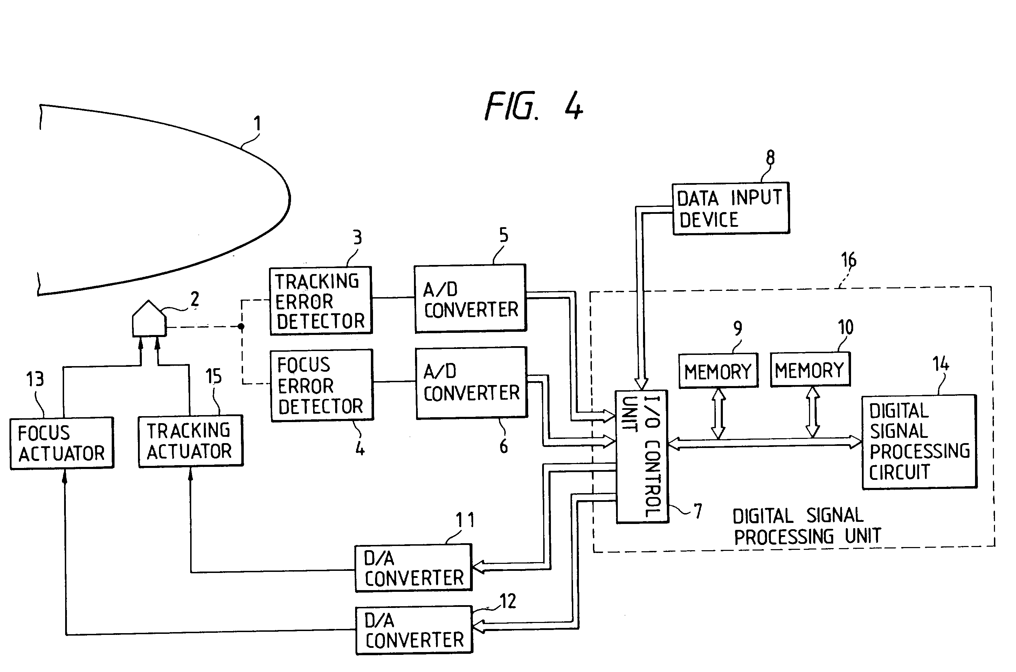

Fig. 4 is a block diagram showing an example of a construction of an optical information recording and reproducing apparatus according to the present invention.

In Fig. 4, the reference numeral 7 denotes an input/output control unit (hereinafter, referred to as "I/O control unit"), and 9 and 10 denote memories. The reference numeral 8 denotes an external data input device. Incidentally, an optical system 2, tracking actuator 15, focus actuator 13, tracking error detector 3, focus error detector 4, A/D converters 5, 6, D/A converters 11, 12 and digital signal processing circuit 14 may be the same as those of the conventional apparatus shown in Fig. 1.

Next, an operation of a servo control apparatus constructed as above will be explained.

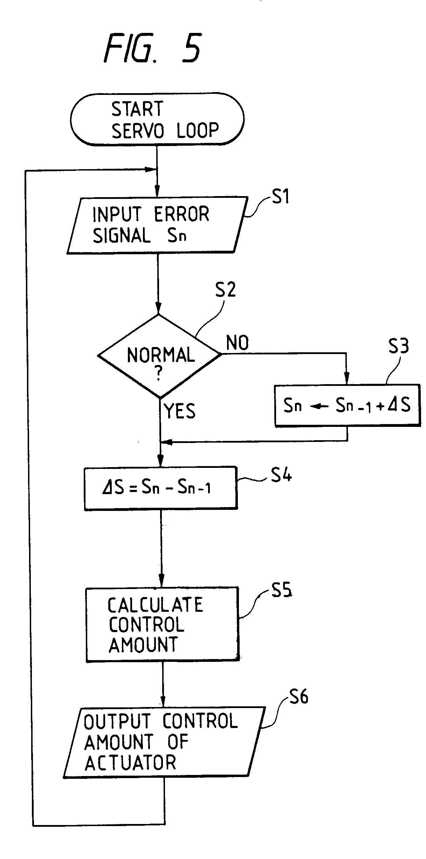

Fig. 5 is a flow chart showing an operation in the servo control performed by means of the apparatus according to a first embodiment of the present invention.

Hereinafter, the operation of the servo control apparatus during the reproducing operation will be fully explained with reference to Figs. 4 and 5.

Incidentally, the description is given here with respect to a tracking servo control, but the present invention can be similarly adapted to a focus servo control.

The reflected light beam spot from the servo bite area of the optical disc 1 is introduced into the optical system 2, where a tracking error signal is detected by the tracking error detector 3. The tracking error signal is converted into a digital signal by the A/D converter 5 and then is inputted to the digital signal processing circuit 14 through the I/O control unit 7 (step S1). The digital signal processing circuit 14 judges whether the error signal is normal or abnormal on the basis of change in level of the signal (step S2). If the signal is an abnormal one due to the defect and/or damage of the disc or the presence of the dust, an error signal Sn is sought by adding a first previous data Sn-1 to a difference $\Delta S$ between the second previous data Sn-2 and the first previous date Sn-1 ($\Delta S$ = Sn-1 - Sn-2) (step S3). And, a difference $\Delta S$ between the obtained Sn and the first previous error signal Sn in the previous servo bite area is sought, and these values Sn and $\Delta S$ are temporarily stored in the memory 9 (step S4). Next, the digital signal processing circuit 14 seeks an control amount by calculating the value Sn on the basis of a predetermined exchange equation (step S5). The calculated result is outputted to the D/A converter 11 through the I/O control unit 7 (step S6). The control amount is converted into an analogue amount by the D/A converter 11 and is inputted to the tracking actuator 15, thus performing the tracking servo control. The tracking servo control is continued with the control amount until a new control amount is obtained in the next servo bite area. On the other hand, in the step S2, if the signal is judged as a normal one, the digital signal processing circuit 14 seeks a difference $\Delta S$ between the value Sn and the first previous error signal Sn-1, and these values Sn and $\Delta S$ are temporarily stored in the memory 9.

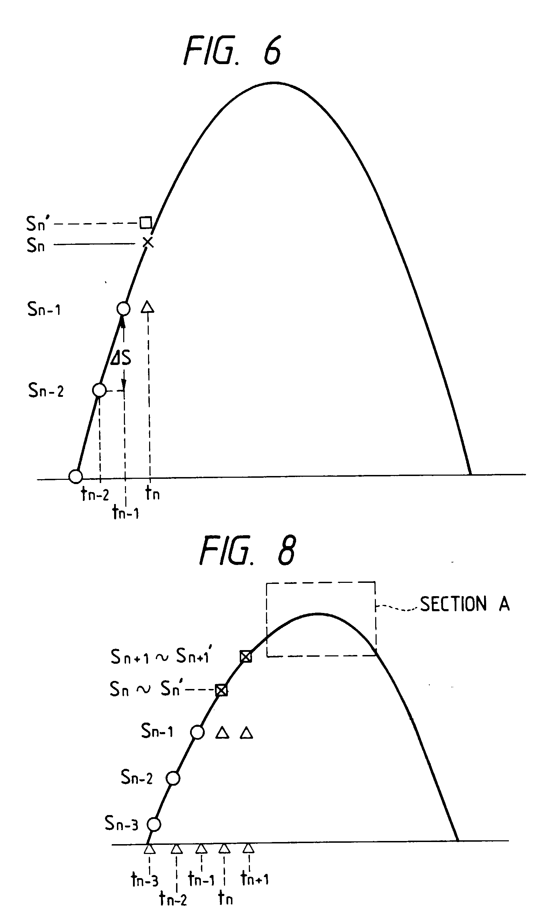

An example of a sample data of the error signal is schematically shown in Fig. 6.

The sample data inputted to the digital signal processing circuit 14 is normally be inputted in the order of Sn-2, Sn-1, Sn. As mentioned above, if the signal Sn is an abnormal signal and thus, the true value Sn can not be obtained, in the conventional method, the value Sn-1 was used as the error signal Sn (shown by $\Delta$ in Fig. 6). However, in the present invention, the difference $\Delta S$ = Sn-1 - Sn-2 is sought, and a value Sn' = Sn-1 + $\Delta S$ is used as the error signal Sn (shown by $\square$ in Fig. 6).

As shown in Fig. 6, it can be seen that the value Sn' of the present invention closely resembles to the true error signal Sn.

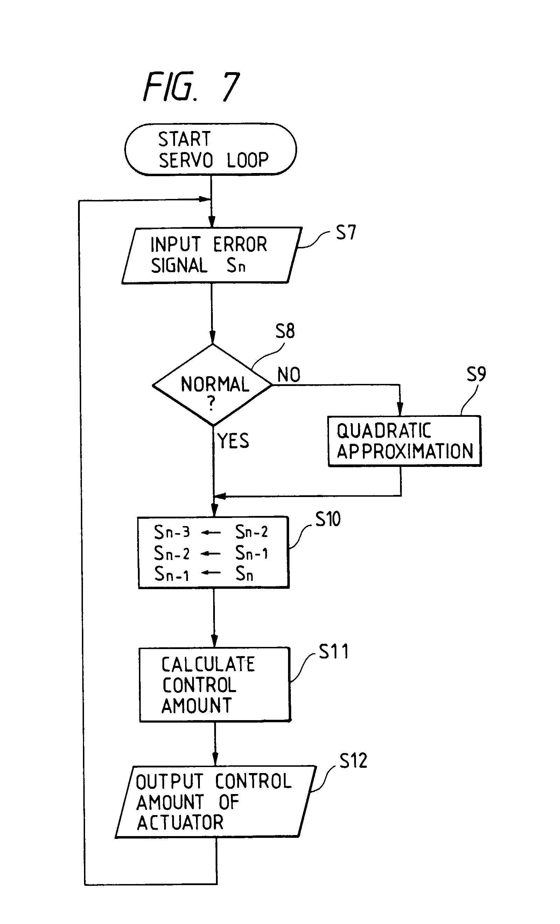

Next, a second embodiment of the present invention will be explained. Fig. 7 is a flow chart showing an operation in the servo control performed by means of an apparatus according to a second embodiment.

Hereinafter, the operation of the servo control apparatus during the reproducing operation will be fully described in connection with the second embodiment with reference to Fig. 7. Incidentally, the arrangement of the apparatus itself is the same as that of the previous embodiment.

The reflected light beam spot from the servo bite area of the optical disc 1 is introduced into the optical system 2, where a tracking error signal is detected by the tracking error detector 3. The tracking error signal is converted into a digital signal by the A/D converter 5 and then is inputted to the digital signal processing circuit 14 through the I/O control unit 7 (step S7). The digital signal processing circuit 14 judges whether the error signal is normal or abnormal (step S8). If the signal is the abnormal one due to the defect and/or damage of the disc or the presence of the dust, an error signal Sn is sought from the following equation by using the data stored in the memory 9 (step S9):

$$Sn = (Sn\text{-}3 + Sn\text{-}2 + Sn\text{-}1)/3 + (Sn\text{-}1 - Sn\text{-}3)$$

And, the digital signal processing circuit 14 seeks an control amount by calculating the value Sn on the basis of a predetermined exchange equation (step S11). The calculated result is outputted to the D/A converter 11 through the I/O control unit 7 (step S12). The control amount is converted into an analogue amount by the D/A converter 11 and is inputted to the tracking actuator 15, thus performing the tracking servo control. The tracking servo control is continued with the control amount until a new control amount is obtained in the next servo bite area.

On the other hand, in the step S8, if the signal is judged as a normal one, the second previous tracking error signal $S_{n-2}$ detected in the previous servo bite area, the first previous tracking error signal $S_{n-1}$, and the present tracking error signal $S_n$ are stored in the memory 9 at a time shared mode, as the third previous or three steps prior tracking error signal $S_{n-3}$, second previous or two steps prior tracking error signal $S_{n-2}$, and first previous tracking error signal $S_{n-1}$, respectively (step S10).

Incidentally, in this second embodiment, while an example that the contents in the memory 9 are rewritten in order whenever a new tracking error signal $S_n$ is obtained to store the data at the time shared mode was explained, for example, only the latest error signal $S_n$ may be stored in an address next to the address of the just previously stored error signal in the memory 9.

An example of the sample data of the error signal is schematically shown in Fig. 8, relating to the second embodiment.

The sample data inputted to the digital signal processing circuit 14 is normally be inputted in the order $S_{n-3}$, $S_{n-2}$, $S_{n-1}$, $S_n$. As mentioned above, if the signal $S_n$ is an abnormal signal and thus, the true value $S_n$ can not be obtained, in the conventional method, the value $S_{n-1}$ was used as the error signal $S_n$ (shown by $\triangle$ in Fig. 6).

However, in the present invention, a value $S_n'$ (shown by $\square$ in Fig. 6) is sought from the quadratic approximation by using the values $S_{n-3} \sim S_{n-1}$, and this value $S_n'$ is used as the error signal $S_n$.

As shown in Fig. 8, it can be seen that the value $S_n'$ of the present invention closely resembles to the true error signal $S_n$.

Further, if the signal $S_{n+1}$ is also judged as an abnormal signal, a value $S_{n+1}'$ is similarly sought by using the values $S_{n-2} \sim S_n$, and the servo control is continued by using this sought value.

A key to the present invention is the accuracy of the approximation in a section A shown in Fig. 8. It is considered that an error signal available to quadratic or cubic approximation can be resembled to the true value. If the accuracy of the approximation can not be available, it is possible to improve it by the following method.

In this method, an inclination is sought by the estimated values $S_n'$ and $S_{n-1}$, and, if the inclination is great, the polynominal approximation (in the illustrated embodiment, quadratic approximation) is used, whereas, if the inclination is small, the first previous or prior error signal is used as it is, as in the conventional technique.

In the illustrated embodiment, while the servo control using the sample servo control was explained, the present invention can be effectively applied to an apparatus which controls the tracking servo control, focus servo control as well as the sample servo control at the time shared mode. For example, in the digital servo control apparatus, if the tracking servo control and the focus servo control are attempted to be effected simultaneously by the use of a single digital signal processing circuit, since it is impossible to perform two servo control simultaneously, the tracking servo control and the focus servo control should be performed alternately. The present invention is also useful in such case.

## Claims

1. An optical information recording and/or reproducing apparatus including detection means (3,4) for detecting a signal indicative of a tracking error and/or focusing error in a time shared mode, calculation means (14) for effecting calculation processing of the detected tracking and/or focusing error signal on the basis of a predetermined equation and for calculating a control amount for at least one actuator (13,15) so as to correct the tracking and/or focusing error, and an actuator (13, 15) which is driven on the basis of said control amount, wherein

    said apparatus further includes memory means (9,10) for storing N signals indicative of tracking and/or focusing errors detected in the time shared mode, wherein when the detected tracking signal is abnormal said calculation means (14) is arranged to estimate a signal indicative of the latest tracking and/or focusing error from the previously detected N signals which are stored in said memory means (9,10), and said calculation means (14) is arranged to effect the calculation of the estimated signal indicative of tracking and/or focusing error on the basis of said predetermined equation to calculate the control amount for the actuator (13,15) so as to correct the tracking and/or focusing error,
    said apparatus being characterized in that the N signals ($S_{n-1}$, $S_{n-2}$; $S_{n-1}$, $S_{n-2}$, $S_{n-3}$) stored in said memory means (9,10) are arranged to be rewritten to include the estimated signal ($S_n'$) indicative of the latest tracking and/or focusing error ($S_n$).

2. An optical information recording and/or reproducing apparatus according to claim 1, wherein said estimation of an error signal is effected on the basis of an equation:

$$Sn = (Sn-1 - Sn-2) + Sn-1$$

where, Sn is an error signal to be estimated, Sn-1 is an error signal obtained by the prior detection, and Sn-2 is an error signal obtained by two steps prior detection.

3. An optical information recording and/or reproducing apparatus according to claim 1, wherein said estimation of an error signal is effected on the basis of an equation:

$$Sn = (Sn-3 + Sn-2 + Sn-1)/3 + (Sn-1 - Sn-3)$$

where, Sn is an error signal to be estimated, Sn-1 is an error signal obtained by the prior detection, Sn-2 is an error signal obtained by the two steps prior detection, and Sn-3 is an error signal obtained by three steps prior detection.

4. An optical information recording and/or reproducing method in which a signal indicative of a tracking and/or focusing error is detected in a time shared mode, comprising the steps of processing the detected tracking and/or focusing error signal on the basis of a predetermined equation,

storing N signals indicative of tracking and/or focusing error detected in the time shared mode in a memory (9,10);
estimating a signal indicative of latest tracking and/or focusing error from the previously detected N signals indicative of tracking and/or focusing error, stored in the memory (9,10), when the signal indicative of tracking and/or focusing error could not be detected;
effecting calculation of the estimated signal indicative of tracking and/or focusing error on the basis of the predetermined equation and calculating the control amount for the actuator so as to correct the tracking and/or focusing error; and
driving the actuator (13, 15) on the basis of the control amount to properly apply a light spot onto a recording medium to thereby effect recording and/or reproduction of information,
said method being characterized by the step of:
rewriting the N signals (Sn-1, Sn-2; Sn-1, Sn-2, Sn-3) stored in the memory (9,10) to include the estimated signal (Sn') indicative of the latest tracking and/or focusing error (Sn).

**Patentansprüche**

1. Optische Informations-Aufzeichnungs- und/oder -Wiedergabevorrichtung mit

Erfassungseinrichtungen (3, 4) zur Erfassung eines einen Spurführungsfehler und/oder einen Fokussierungsfehler darstellenden Signals in einer zeitlich verschachtelten Betriebsart,
einer Berechnungseinrichtung (14), die das erfaßte Spurführungs- und/oder Fokussierungsfehlersignal auf Grundlage einer vorbestimmten Gleichung einer Berechnung unterzieht und einen Steuerwert für zumindest eine Stelleinrichtung (13, 15) zur Korrektur des Spurführungs- und/oder Fokussierungsfehlers berechnet, und
der Stelleinrichtung (13, 15), die auf Grundlage des Steuerwerts angesteuert wird, wobei
die Vorrichtung Speichereinrichtungen (9, 10) zum Speichern von N Signalen aufweist, die die in der zeitlich verschachtelten Betriebsart erfaßten Spurführungs- und/oder Fokussierungsfehlersignale darstellen, wobei, falls das erfaßte Spurführungsfehlersignal anormal ist, die Berechnungseinrichtung (14) anhand der vorhergehend erfaßten, in den Speichereinrichtungen (9, 10) gespeicherten N Signale ein den letzten Spurführungsfehler und/oder Fokussierungsfehler darstellendes Signal abschätzt und das abgeschätzte, den Spurführungsfehler und/oder Fokussierungsfehler darstellende Signal zur Berechnung des Steuerwerts für die Stelleinrichtung (13, 15) auf Grundlage der vorbestimmten Gleichung zur Korrektur des Spurführungs- und/oder Fokussierungsfehlers einer Berechnung unterzieht,

**dadurch gekennzeichnet,** daß
die in den Speichereinrichtungen (9, 10) gespeicherten N Signale (Sn-1, Sn-2; Sn-1, Sn-2, Sn-3) überschrieben werden, damit sie das abgeschätzte, den letzten Spurführungs und/oder Fokussierungsfehler (Sn) darstellende Signal (Sn') enthalten.

2. Optische Informations-Aufzeichnungs- und/oder -Wiedergabevorrichtung nach Anspruch 1, **dadurch gekennzeichnet,** daß die Abschätzung eines Fehlersignals auf der Grundlage der Gleichung

$$Sn = (Sn-1 - Sn-2) + Sn-1$$

durchgeführt wird, wobei es sich bei Sn um das abzuschätzende Fehlersignal, bei Sn-1 um ein bei der vorhergehenden Erfassung erhaltenes Fehlersignal und bei Sn-2 um ein bei der Erfassung zwei Schritte zuvor erhaltenes Fehlersignal handelt.

3. Optische Informations-Aufzeichnungs- und/oder -Wiedergabevorrichtung nach Anspruch 1, **dadurch gekennzeichnet,** daß die Abschätzung eines Fehlersignals auf der Grundlage der Gleichung

$$Sn = (Sn\text{-}3 + Sn\text{-}2 + Sn\text{-}1)/3 + (Sn\text{-}1 - Sn\text{-}3)$$

durchgeführt wird, wobei es sich bei Sn um das abzuschätzende Fehlersignal, bei Sn-1 um das bei der vorhergehenden Erfassung erhaltene Fehlersignal, bei Sn-2 um ein bei der Erfassung zwei Schritte zuvor erhaltenes Fehlersignal und bei Sn-3 um ein bei der Erfassung drei Schritte zuvor erhaltenes Fehlersignal handelt.

4. Optisches Informations-Aufzeichnungs- und/oder -Wiedergabeverfahren, bei dem ein ein Spurführungs- und/oder Fokussierungsfehler darstellendes Signal in einer zeitlich verschachtelten Betriebsart erfaßt wird, mit den Schritten

Verarbeiten des erfaßten Spurführungs- und/ oder Fokussierungsfehlersignals auf der Grundlage einer vorbestimmten Gleichung, Speichern von in der zeitlich verschachtelten Betriebsart erfaßten Spurführungs- und/oder Fokussierungsfehler darstellenden N Signalen in einer Speichereinrichtung (9, 10), Abschätzen eines den letzten Spurführungs- und/oder Fokussierungsfehler darstellenden Signals anhand der vorhergehend erfaßten, Spurführungs- und/oder Fokussierungsfehler darstellenden und in der Speichereinrichtung (9, 10) gespeicherten N Signale, falls das den Spurführungs- und/oder Fokussierungsfehler anzeigende Signal nicht erfaßt werden konnte, Unterziehen des abgeschätzten, den Spurführungs- und/ oder Fokussierungsfehler darstellenden Signals einer Berechnung auf Grundlage der vorbestimmten Gleichung und Berechnen eines Steuerbetrags für eine Stelleinrichtung zur Korrektur des Spurführungs- und/oder Fokussierungsfehlers, und Ansteuern der Stelleinrichtung (13, 15) auf der Grundlage des Steuerbetrags zum genauen Aufbringen eines Lichtpunkts auf einen Aufzeichnungsträger zur Aufzeichnung und/oder Wiedergabe von Informationen,

**gekennzeichnet durch den Schritt**
Überschreiben der in der Speichereinrichtung (9, 10) gespeicherten N Signale (Sn-1, Sn-2; Sn-1, Sn-2, Sn-3), damit sie das abgeschätzte, den letzten Spurführungs- und/oder Fokussierungsfehler (Sn) darstellende Signal (Sn') enthalten.

**Revendications**

1. Appareil d'enregistrement et/ou reproduction d'informations optiques comprenant des moyens de détection (3, 4) destinés à détecter un signal représentatif d'une erreur de suivi et/ou d'une erreur de focalisation dans un mode en temps partagé, des moyens de calcul (14) destinés à effectuer un traitement de calcul sur le signal détecté d'erreur de suivi et/ou de focalisation sur la base d'une équation prédéterminée et à calculer une valeur de commande pour au moins un actionneur (13, 15) afin de corriger l'erreur de suivi et/ou de focalisation, et un actionneur (13, 15) qui est attaqué sur la base de ladite valeur de commande, dans lequel

ledit appareil comprend en outre des moyens à mémoires (9, 10) destinés à stocker N signaux représentatifs d'erreurs de suivi et/ou de focalisation détectés dans le mode en temps partagé, dans lequel lorsque le signal détecté de suivi est anormal, lesdits moyens de calcul (14) sont conçus pour estimer un signal représentatif de la dernière erreur de suivi et/ou de focalisation parmi les N signaux détectés précédemment, qui sont stockés dans lesdits moyens à mémoires (9, 10), et lesdits moyens de calcul (14) sont conçus pour effectuer le calcul du signal estimé représentatif d'une erreur de suivi et/ou de focalisation sur la base de ladite équation prédéterminée afin de calculer la valeur de commande pour l'actionneur (13, 15) pour corriger ainsi l'erreur de suivi et/ou de focalisation, ledit appareil étant caractérisé en ce que les N signaux (Sn-1, Sn-2 ; Sn-1, Sn-2, Sn-3) stockés dans lesdits moyens à mémoires (9, 10) sont conçus pour être réécrits de façon à comprendre le signal estimé (Sn') représentatif de la dernière erreur (Sn) de suivi et/ou de focalisation.

2. Appareil d'enregistrement et/ou reproduction d'informations optiques selon la revendication 1, dans lequel ladite estimation d'un signal d'erreur est effectuée sur la base d'une équation :

$$Sn = (Sn\text{-}1 - Sn\text{-}2) + Sn\text{-}1$$

où, Sn est un signal d'erreur devant être estimé, Sn-1 est un signal d'erreur obtenu par la détection précédente, et Sn-2 est un signal d'erreur obtenu par deux étapes avant la détection.

3. Appareil d'enregistrement et/ou reproduction d'informations optiques selon la revendication 1, dans lequel ladite estimation d'un signal d'erreur est effectuée sur la base d'une équation :

Sn = (Sn-3 + Sn-2 + Sn-1)/3 + (Sn-1 - Sn-3)

où, Sn est un signal d'erreur devant être estimé, Sn-1 est un signal d'erreur obtenu par la détection précédente, Sn-2 est un signal d'erreur obtenu par les deux étapes précédant la détection, et Sn-3 est un signal d'erreur obtenu par trois étapes précédant la détection.

4. Procédé d'enregistrement et/ou reproduction d'informations optiques dans lequel un signal représentatif d'une erreur de suivi et/ou de focalisation est détecté dans un mode en temps partagé, comprenant les étapes dans lesquelles on traite le signal détecté d'erreur de suivi et/ou de focalisation sur la base d'une équation prédéterminée,

on stocke N signaux représentatifs d'une erreur de suivi et/ou de focalisation détectée dans le mode en temps partagé, dans une mémoire (9, 10),

on estime un signal représentatif de la dernière erreur de suivi et/ou de focalisation à partir des N signaux détectés précédemment représentatifs d'une erreur de suivi et/ou de focalisation, stockés dans la mémoire (9, 10), lorsque le signal représentatif d'une erreur de suivi et/ou de focalisation n'a pas pu être détecté ;

on effectue un calcul du signal estimé représentatif d'une erreur de suivi et/ou de focalisation sur la base de l'équation prédéterminée et on calcule la valeur de commande pour l'actionneur afin de corriger l'erreur de suivi et/ou de focalisation ; et

on attaque l'actionneur (13, 15) sur la base de la valeur de commande pour appliquer de façon appropriée une tache lumineuse sur un support d'enregistrement afin d'effectuer un enregistrement et/ou une reproduction d'informations,

ledit procédé étant caractérisé par l'étape dans laquelle :

on réécrit les N signaux (Sn-1, Sn-2 ; Sn-1, Sn-2, Sn-3) stockés dans la mémoire (9, 10) de façon à comprendre le signal estimé (Sn') représentatif de la dernière erreur (Sn) de suivi et/ou de focalisation.

## FIG. 1

EP 0 409 574 B1

FIG. 2A

WOBBLE PIT A

CLOCK PIT

WOBBLE PIT B

CENTER OF SPOT

TRACK DEVIATION

CENTER OF TRACK

SPOT

SPOT MOVING DIRECTION

FIG. 2B

$T_A$

$T_B$

$T_A - T_B = 0$

ON TRACK

FIG. 2C

$T_A$

$T_B$

$T_A - T_B = S$

FIG. 3

$T_A - T_B = "S"$

$T_A - T_B = "0"$

TIME

SAMPLE POINT

10

FIG. 4

## FIG. 5

START
SERVO LOOP

INPUT ERROR
SIGNAL Sn — S1

NORMAL ? — S2

NO

$S_n \leftarrow S_{n-1} + \Delta S$ — S3

YES

$\Delta S = S_n - S_{n-1}$ — S4

CALCULATE
CONTROL
AMOUNT — S5

OUTPUT CONTROL
AMOUNT OF
ACTUATOR — S6

FIG. 6

FIG. 8

# FIG. 7

START
SERVO LOOP

INPUT ERROR
SIGNAL Sn — S7

NORMAL ? — S8
NO → QUADRATIC APPROXIMATION — S9

YES

$S_{n-3} \leftarrow S_{n-2}$
$S_{n-2} \leftarrow S_{n-1}$
$S_{n-1} \leftarrow S_n$ — S10

CALCULATE
CONTROL
AMOUNT — S11

OUTPUT CONTROL
AMOUNT OF
ACTUATOR — S12